# EUROPEAN PATENT APPLICATION

(11) **EP 2 455 734 A1**
(43) Date of publication of application: **23.05.2012**
(21) Application number: 11187740.3
(22) Date of filing: 03.11.2011
(51) Int. Cl.: G01L 1/24, G01M 3/04, G01F 23/292

(54) **Sensor device, roof provided with a sensor device and use of a sensor device**

(30) Priority: 04.11.2010 NL 2005629
(71) Applicant: Dion WPS Holding B.V., 5721 TZ Asten (NL)
(72) Inventor: Maas, Martinus, 5721 TZ ASTEN (NL); Van De Ven, Matthijs Theodorus Wilhelmus, 5725 CJ ASTEN HEUSDEN (NL)
(74) Representative: Algemeen Octrooi- en Merkenbureau

(57) **Abstract**

The invention relates to a sensor device for detecting a change in an amount of liquid, comprising a substantially elongated conductor for electromagnetic signals. The conductor is in contact with a contact element with a first circumferential part thereof, at a first axial position of the elongated conductor. The conductor is further in contact with a pressure element at a second axial position of the elongated conductor axially spaced from said first axial position, substantially with a second circumferential part thereof located opposite said first circumferential part. The pressure element and the contact element are movable relative to each other for inducing a micro bend or micro stretch in the conductor. The pressure element is connected to a liquid container, such that an increase or a decrease of an amount of liquid in the liquid container causes the relative spacing between the pressure element and the contact element to decrease or increase, respectively.

## Description

The invention relates to a sensor device for detecting a change in an amount of liquid.

The invention also relates to a roof for a building provided with such a sensor device.

The invention further relates to the use of a sensor device as referred to above.

A roof for a building is designed to protect the building against outside moisture influences. The roof may be a pitched roof, but also a flat roof, for example. In the latter case, the flat roof is provided with circumferentially mounted edges. In this way a buffer capable of collecting water temporarily, for example after a temporary large amount of precipitation, is created. This relieves a drain that is present, such as a drainpipe or a roof gutter. The drain may become obstructed. In that case water will accumulate in the buffer. The relatively large pressure load of the water on the roof may lead to leakage. Also in the situation in which a large amount of liquid is present in the buffer, which liquid can then nevertheless drain away, there is a possibility of a leakage developing in the roof. Leakages can develop in other ways as well, however. Not only in so-called flat roofs can leakages develop, but also in pitched roofs, for example as a result of roof tiles deteriorating or being displaced. Such leakages are difficult to detect. In many cases such a leakage only becomes visible at a late stage, since an occupant or a user of the building will only notice the damage when the leakage reaches the inner side of the roof of the building and thus becomes noticeable. As a result, the damage caused by leakage is relatively large.

In view of the above problems it is an object of the present invention to provide a sensor device by means of which leakages and/or the risk of leakages can be detected relatively quickly and/or in an accurate manner.

In order to accomplish that object, there is provided a sensor device for detecting a change in an amount of liquid in accordance with the features of claim 1. The sensor device comprises a substantially elongated conductor for electromagnetic signals. The signal may consist of electromagnetic radiation from the visible spectrum, but also of signals with radiation of other wavelengths. With a first circumferential part or circumferential side of the conductor, i.e. a first part of the circumference, the conductor is in contact with a contact element at a first axial position of the conductor. At a second axial position of the elongated conductor axially spaced from the first axial position, a second circumferential part or circumferential side of the conductor located opposite said first circumferential part or circumferential side of the conductor, i.e. a part of the circumference of the conductor spaced from the first part of the circumference of the conductor, is in contact with a pressure element. Preferably, the first circumferential part is freely movable in the direction of the normal of the first circumferential part at the location of the second axial position. The pressure element and the contact element are movable relative to each other. Upon movement relative to each other, the pressure element and the contact element induce a micro bend or micro stretch in the conductor. A micro bend or micro stretch is a very small deformation, which leads to a perceptible change in the signal transmitted through the conductor. In other words, the pressure element and the contact element are placed so that a movement of the pressure element and the contact element relative to each other leads to a perceptible distortion in the electromagnetic signal being transmitted through the conductor. The pressure element is further connected to a liquid container. The connection is such that an increase or a decrease of the amount of liquid in the liquid container causes the relative spacing between the pressure element and the contact element to decrease or increase, respectively. The liquid container may be placed at a desired position so as to monitor the increase or decrease of an amount of liquid at that position. The liquid container may be placed on or in the roof, for example. In the case of an accumulation of the amount of liquid in the liquid container, the pressure element will be moved in the direction of the contact element, resulting in a relatively large micro bend or micro stretch in the conductor. Said larger micro bend or micro stretch will result in a greater distortion in the electromagnetic signal being transmitted through the conductor. Said greater distortion is detectable. Using the sensor device according to the present invention it is thus possible to monitor the accumulation of liquid at a desired position. Said accumulation can be regarded as a measure of a leakage and/or a risk of leakage. Using the sensor device according to the present invention it is therefore possible to be alerted relatively quickly to a leakage and/or a risk of leakage. The object of the present invention is thus accomplished.

In one embodiment, the elongated conductor is connected at one end thereof to a signal source for emitting the electromagnetic signals. The electromagnetic signals are passed through the conductor. At a second end located opposite the first end, the conductor is connected to a signal detector. Said signal detector is designed to detect disturbances in the electromagnetic signal caused by the micro bend or micro stretch. The signal detector is further capable of detecting the degree of micro bend or micro stretch. The signal detector may be connected to alarm means. Said alarm means for example comprise a user interface, which is capable of keeping the user informed of the amount of liquid in the liquid container, and which is also capable of alerting the user when the amount of liquid in the container exceeds a specified value.

It is noted in that regard that the Lightspeed Optical Detection System, OSP.01.03, which is available from Lightspeed Systems of Asten, the Netherlands, is an example of a suitable conductor with signal source and signal detector. The conductor may be an optical cable of plastic material, through which light can be passed. Such a conductor is also described in NL1024456, which publication is incorporated herein by reference. It will be understood that also other conductors may be suitable, and that the skilled person will have no difficulty in selecting a suitable conductor.

The sensor device preferably comprises a substantially flat base. Provided on top of said base are the contact element, the conductor and the pressure element. Because of the presence of the flat base, the sensor device is capable of achieving accurate results.

It is preferable in that regard if the contact element extends some distance from the base. Said distance may be relatively small, for example a few centimetres or a few millimetres. The conductor is placed on the contact element at the location of the first axial position of the conductor. The distance between the first axial position and the second axial position is preferably selected so that the conductor is spaced from the base at the location of the second axial position. The distance between the first axial position and the second axial position is preferably relatively small, for example a few centimetres or a few millimetres. Said small distance, combined with the flexibility of the conductor, ensures that the conductor is spaced from the base at the location of the second axial position, so that movement of the pressure element and the contact element relative to each other will lead to a readily detectable micro bend or micro stretch.

It is preferable if the pressure element is a substantially flat plate so as to accurately pass on the pressure communicated to the pressure element by the liquid container.

The sensor device may comprise a second contact element which is axially spaced from the contact element. Said second contact element is in contact with the first circumferential part or circumferential side of the conductor. Said second contact element may be associated with the pressure element. Two opposite edges of said pressure element in that case effect a micro bend or micro stretch at the location of the contact element and the second contact element each time said pressure element moves relative to the contact elements. According to another possibility, however, a second pressure element is disposed a further axial distance from the contact element. Said second pressure element is also in contact with the second circumferential part or circumferential side of the conductor.

In one embodiment, the sensor device is a substantially U-shaped contact section. The U-shaped contact section comprises legs. The contact element and the second contact element form the legs of the contact section. The conductor is placed on said legs. The spacing between the legs is preferably relatively small. Said spacing may be a few centimetres, for example, but preferably it will be a few millimetres. The U-shaped contact section may be made of rubber, for example.

In order to realise a satisfactory micro bend or micro stretch at the location of the contact elements, it is preferable if the axial spacing between the legs of the U-shaped contact section is smaller than the axial spacing between the pressure element and the second pressure element.

It is very advantageous if the liquid container is a container formed by a roof bottom and upright circumferential walls of a flat roof. In this way a measure of the amount of liquid on the flat roof is directly obtained. The sensor device is capable of registering an accumulation in the liquid container. In case a predetermined value is exceeded, the sensor device can alert the occupant or user to a possible risk of leakage.

In another embodiment, which is very suitable for detecting leakages in the roof, for example, the liquid container comprises a moisture absorption unit. Said moisture absorption unit is connected to the pressure element or may include the pressure element. The moisture absorption unit is designed to expand or contract in case of an increase or a decrease, respectively, of the amount of liquid in the liquid container. The liquid container including the moisture absorption unit may be placed below the outer edge of the roof, for example. In case of a leakage, the moisture absorption unit will absorb moisture. Said absorption of moisture causes the moisture absorption unit to expand. As a result, the moisture absorption unit will displace the pressure element relative to the contact element. In this way a micro bend or micro stretch of the conductor as described above can be realised. The sensor device according to this embodiment is thus capable of detecting a leakage in a roof at an early stage. When a specified amount of moisture in the moisture absorption unit is exceeded, the sensor device can alert the occupant or user of the building.

The moisture absorption unit preferably comprises a block-shaped absorption material which is confined on at least three sides in a substantially rigid absorption container. As a result of said confinement, the moisture absorption unit can only expand in a limited number of directions. This further increases the sensitivity of the sensor device.

A freely movable side of the absorption material can be brought into contact with the second circumferential part or circumferential side of the conductor. The absorption material thus comprises the pressure element, as it were. As a result, the sensor device can be made of relatively few parts.

The freely movable side of the absorption material is preferably connected by means of spring elements to a wall that is spaced from said freely movable side. Said wall may form part of the absorption container. The spring elements function to cause the absorption material to return to a starting position when the amount of liquid in the absorption material decreases.

Preferably, the freely movable side of the absorption material is movable substantially in a horizontal plane. The absorption material may be confined in the absorption container on a bottom side and three side walls.

The sensor device according to the present invention comprises a pressure element and a contact element, which are movable relative to each other. Said movement takes place in a first direction. In one embodiment, the sensor device may comprise an additional pressure element and an additional contact element. Said additional pressure element and said additional contact element may be movable relative to each other in a second direction substantially perpendicular to the first direction. In this way the sensor device will be sensitive in two directions. Said relative movement in two directions is preferably detectable by the signal detector. The signal detector can thus distinguish between a relative movement of the pressure element and the contact element and a relative movement of the additional pressure element and the additional contact element.

It is preferable in that regard if the pressure element and the contact element are designed to detect an amount of liquid in the liquid container, with the pressure element and the contact element preferably being designed for movement in a vertical direction relative to each other. The additional pressure element and the additional contact element preferably comprise a moisture absorption unit. The moisture absorption unit preferably provides a relative movement in the horizontal plane between the additional pressure element and the additional contact element. Using such a sensor device it becomes possible to monitor both the amount of liquid, for example the amount of liquid in a buffer storage of a flat roof, and any leakage in the roof itself. The sensor device is therefore capable of detecting both leakage and any risk of leakage.

According to one aspect of the present invention, there is provided a roof for a building, which roof comprises a sensor device according to the present invention. Advantages of such a roof have already been described in the foregoing.

Another aspect of the present invention concerns the use of a sensor device according to the present invention. Advantages thereof have already been described in the foregoing. As already described before, said use may comprise the detection of liquid in and/for on a roof of a building.

The invention will now be explained in more detail with reference to a few embodiments thereof as illustrated in the appended figures, in which:
Figure 1 is a side view of a system comprising a sensor device according to the present invention;
Figure 2 is a side view of the system shown in figure 1, in which a large amount of water is shown to be present;
Figure 3 is a side view of an embodiment of the system comprising a sensor device according to the present invention, in which a leakage has occurred;
Figure 4a is a side view of an embodiment of the sensor device according to the present invention;
Figure 4b is a top plan view of an embodiment of the sensor device according to the present invention;
Figure 5 is a top plan view of another embodiment of the sensor device according to the present invention;
Figure 6 is a side view, partially in cross-section, of the sensor device according to another embodiment of the present invention.

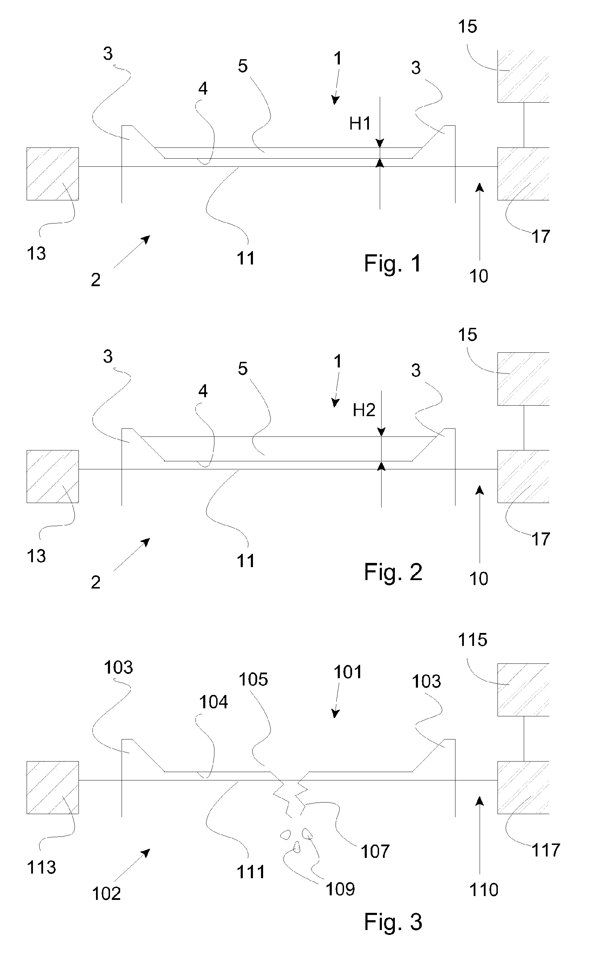

Figure 1 shows a schematic side view of a system 1 according to the present invention. The system 1 comprises a roof construction 2, a so-called flat roof in the illustrated embodiment, with upright edges 3. The upright edges and the roof bottom 4 form a basin or liquid container in which water 5 can be stored temporarily to be subsequently discharged by means not shown, for example a drain, in the direction of, for example, the sewer system. The basin thus forms a buffer for water, as it were, which is to be discharged via a drainpipe, for example. The system 1 according to the present invention is provided with a sensor device 10. The sensor device 10 comprises a conductor sensor 11, which is connected to a signal source 13 and a detection system 15. The detection system 15 is further connected to alarm means 17. The conductor sensor is disposed under the bottom 4 of the basin. The conductor sensor comprises a conductor through which a signal can be transmitted, with a change in the external load on the signal line (in particular caused by pressure) resulting in a change in the signal, which can be registered by the detection system 15. The signal may consist of electromagnetic radiation from the visible spectrum, but signals with radiation of other wavelengths are also possible. The signal may be a pulsed light signal through an optical fibre, for example. Changes in the signal are detected when the optical fibre is externally loaded. Very small deformations may already lead to a perceptible change in the signal. Such small deformations are generally indicated as micro bends or micro stretches.

As will be explained hereinafter, the system 1 comprising the sensor device 10 is capable of monitoring the condition of the roof.

Figure 2 shows the situation in which the water 5 in the basin cannot drain away via the drain (not shown) due to certain circumstances. The conductor sensor 11 is disposed under the bottom 4 of the roof construction 2 in such a manner that it is capable of detecting the changed pressure buildup caused by the higher water level H2. As a result of the changed pressure caused by the higher water column H2, the conductor sensor 11 will send a different signal to the detection system 15. Said detection system 15 is capable of registering the pressure buildup by changing water columns and, if necessary, activate alarm means 17. This can take place, for example, when the pressure buildup exceeds a specified value. It is also conceivable for the detection system 15 to activate the alarm means 17 when the derivative of the pressure buildup in time is greater than a predetermined value. In the latter case, the speed at which the water column rises exceeds a specified desired value.

If the water column H2 exceeds a critical value, this may lead to damage to the roof construction 2, or to leakages in the roof construction 2. Such leakages or damage can also be measured with the system 1 comprising the sensor device 10 according to the present invention.

Figure 3 shows a situation in which there is a leak 107 in the roof system 101. Water 105 oozes downward via the leak 107, and from there it moves further in the form of water drops 109, for example. Those skilled in the art will appreciate that the leak 107 is schematically indicated in the figure merely by way of illustration of the present invention. The water 105 that goes through the leak 107 may or may not come into direct contact with the conductor sensor 111. The conductor sensor 111 can measure the change in pressure caused by the leakage, as will be explained in more detail yet, and will pass it on to the detection system 115. The detection system 115 detects the changing signal from the conductor sensor 111. The detection system 115 is capable of activating alarm means 117 on the basis of said changing signal.

It is possible to combine the sensor devices 10 and 110 shown in figure 2 and figure 3, respectively, or to use them separately. Thus it is possible to provide a system 1 comprising a sensor device 10 which is capable of monitoring changes in the water column in the basin of the roof construction 2. It is also possible to provide a system 101 comprising a sensor device 110 which is capable of tracing leaks 107. It is preferable, however, to use such a system 1 comprising a sensor device 10 as a combination system, that is, a system in which the sensor device is capable both of detecting the changing water column and of tracing leaks.

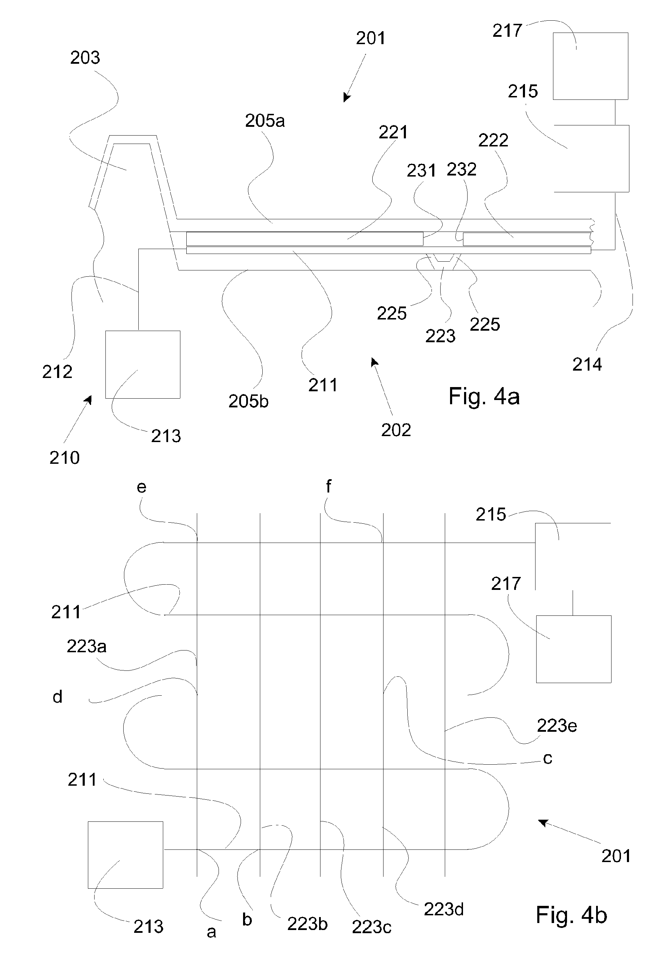

Figure 4a is a schematic side view of a system 201 comprising a sensor device 210 according to the present invention. In the illustrated embodiment, the sensor device 210 is placed between two roof elements 205a and 205b. The upper roof element 205a, such as a roof layer, forms part of the bottom of the liquid container. The lower roof element 205b forms part of the bottom side of the roof construction 2. It is noted that the sensor device 210 that is shown herein is only shown schematically. The figure is not shown to scale, for example, in order to illustrate the sensor device 210. The sensor device 210 comprises a signal source 213 which is connected to a conductor sensor 211 via a line 212. At its other end, the conductor sensor is connected, via a line 214, to a signal detector in the form of a detection system 215. The lines 212 and 214 may be any lines suitable for passing a signal emitted by the signal source 213. The lines 212 and 214 may also be conductors or conductor sensors, for example. The detection system is further connected to alarm means 217. As is shown in figure 4a, the conductor sensor 211 is placed on a contact element configured as a section 223 at a specified location. In the illustrated embodiment, said section 223 is U-shaped, comprising two legs 225. The ends of the legs form contact points, on which the conductor 211 is placed. As shown in figure 4a, pressure plates 221 and 222 are provided on an upper side of the conductor sensor 211. Said pressure plates 221 and 222 are in pressure-transmitting contact with the upper roof element 205a. In other words, if a pressure buildup takes place in the basin of the roof construction 202, the pressure plates 221 and 222 will pass this pressure downward. Preferably this takes place in the form of a downward movement of the pressure plates 221 and 222. The pressure plate 221 is disposed in such a manner with its side edge 231 that the side edge 231 is laterally spaced from the section 223. The side edge 231 is spaced a small lateral distance from the leg 225. The same holds for the side wall 232 of the pressure plate 222. Said side wall is laterally spaced from the other of the two legs 225. In this way an increase of the pressure in the basin of the roof construction 202 will result in a downward movement of the pressure plates 221 and 222. As a result, a bend will occur in the conductor or conductor sensor 211. Said bend will develop near the section 223. The bend will cause a disturbance in the signal emitted by the signal source 213. Said disturbance can be measured by the detection system 215. A higher or a lower pressure in the base in of the roof construction 202 will lead to differences in bend or stretch of the conductor sensor 211. The detection system 215 is capable of detecting said deviations in the signal. This enables the detection system 215 to accurately monitor the pressure buildup in the basin of the roof construction 211. When a specified limiting value is exceeded, the detection system 215 will activate the alarm means 217.

Figure 4b is a schematic top plan view of a possible embodiment of the system 201 of figure 4a. As the figure shows, the system 201 comprises a number of laterally spaced sections 223a-e. Provided in a winding pattern on top of said sections 223a-e is a conductor sensor 211. The skilled person will appreciate that the conductor sensor 211 may be arranged in different patterns. The winding pattern may also be a spiral or a rectangular pattern, for example. Important is, however, that a pressure contact a - f is formed at each place of contact between the signal line 211 and the sections 223a - 223e. For the sake of clarity not all contact points are indicated by a letter. In the case of a deformation of said contact points a - f, for example as a result of the downward movement of the pressure plates 221, 222 shown in figure 4a, said contact points a - f cause a change in the signal emitted by the signal source 213. Said change can be measured by the detection system 215. It is also possible to distinguish between the formations that occur locally and the formations that are substantially the same for all contact points. This makes it possible to determine whether the changes in the signal are caused by a water column that is becoming higher or whether the changes in the signal are caused by a local defect, for example. For example, if only point c effects a deviation in the signal, this cannot possibly be caused by a water column that is becoming higher, as in that case all contact points a - f will contribute to a change in the signal. The cause may be a leakage in that case. The system 201 may be designed so that the alarm means 217 will be activated also in the case of a local deviation.

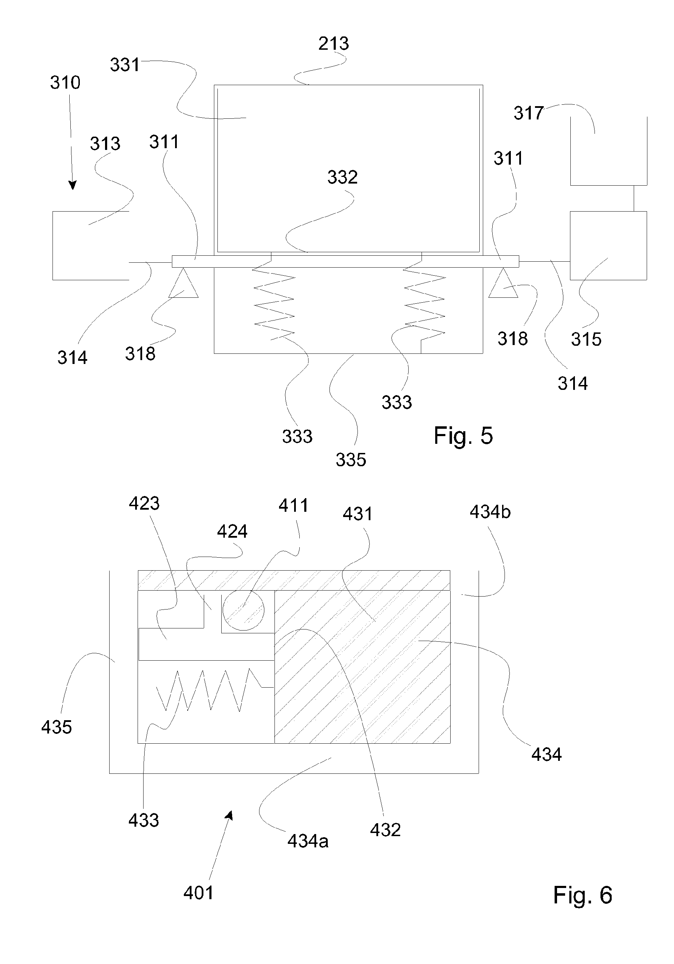

Figure 5 shows an embodiment of a sensor device 310 by means of which leakages can be detected. The sensor system 310 comprises a signal source 313, which is connected to the conductor sensor 311 via a first line 314. At the opposite end of the conductor sensor, the sensor is connected to the detection system 315 via a line 314. The detection system is further connected to alarm means 317. The conductor sensor 311 is laid over shuttering 334. At the edges of the shuttering, or at least near the edges of the shuttering, the conductor sensor 311 is connected to the fixed world 318. A water detection means 331 is provided in the shuttering. The water detection means 331 is a moisture absorption means, for example, such as a block of material which expands upon exposure to moisture or water. The block-like water detection means 331 abuts the shuttering 334 on three sides. On a bottom side, the water detection means is retained as well. The water detection means 331 can thus still expand at least in the direction of the conductor sensor 311. The water detection means 331 may also be retained against expansion on an upper side. In the embodiment that is shown in figure 5, the free side 332 of the water detection means 331 is connected via spring means 333 to the side of the shuttering 334 opposite thereto. Said spring elements 333 function to ensure that the water detection means 331 will remain in place, unless the detection means 333 start to expand as a result of moisture absorption. The conductor sensor 311 may or may not be in direct contact with the free side 332 of the water detection means 331. Upon absorption of water by the water detection means 331, said water detection means 331 will start to expand. Expansion will take place in the direction of the free side 335 of the shuttering 334. Upon expansion of the water detection means 331, the conductor sensor 311 will move along slightly with the movement of the free side 332 of the water detection means 331. Since the conductor sensor is rigidly connected, at least in lateral direction, by means of attachments 318 near the edges of the shuttering 334, the movement of the water detection means 331 creates a bend in the conductor sensor 311. Said bend leads to a disturbance in the signal emitted by the signal source 313. Said disturbance, and also the extent of the disturbance, can be measured by the detection system 315. If the expansion of the water detection means 331 exceeds a specified value, this means that an undesirable accumulation of moisture may have occurred in the roof construction 2. This may indicate a moisture problem, for example caused by poor insulation, or a leakage. In the case of a specified value being undesirably exceeded, the detection system 315 will also activate the alarm means 317.

Figure 6 shows a system 401 in which a combination of pressure detection caused by a higher water column and moisture detection is possible. The system is shown in side view and partial cross-sectional view. The system comprises a shuttering 434 with a bottom 434a. Disposed inside said shuttering is a water detection means 431. The water detection means abuts the bottom of the shuttering with an underside thereof. The water detection means 431 is also in contact with a side wall 434b of the shuttering 434. At its opposite end, the water detection means is connected to a free side wall 435 of the shuttering 434 by means of a spring element 433. A sensor line 411 extends along the free end 432 of the water detection means 431. The sensor line 411 lies on a section 423. Said section is similar to the section shown in figure 4a. In the illustrated embodiment, the section is provided with a positioning means 424 for attaching the sensor line relatively rigidly at the location of the section. The positioning means 424 in any case prevents local movement of the conductor sensor 411 in the direction of the free sidewall 435 of the shuttering 434. The positioning element 424 functions in a similar manner as the fixing elements 318 shown in figure 5. It is noted that in the situation shown in figure 6 the section 423 preferably extends near the side wall of the shuttering, in such a manner that the moisture absorption means 434 can move along the section 423 upon expansion and subsequently press against the conductor 411, such that a micro bend or micro stretch will occur in the conductor 411. Disposed on top of the conductor sensor is a pressure plate 421. Said pressure plate is placed in a similar manner as in the situation shown in figure 4a. The system 401 shown in figure 6 makes it possible to measure changes in a signal emitted by a signal source as a result of a pressure buildup in a basin of a roof construction caused by accumulations of moisture in the roof construction. To that end, a detection system as described in the foregoing is provided. Said detection system is not shown in figure 6. The detection system may be designed to distinguish between changes in the signal caused by an increased pressure in the basin of the roof construction and changes caused by an accumulation of moisture in the roof construction. The reason for this is that both situations set up a bend or stretch (bend in the conductor) in directions substantially perpendicular to each other. In the case of a pressure change, the bend will be directed downward, and in the case of an accumulation of moisture or a leakage the bend will be directed substantially sideways. The detection system to 15 is capable of distinguishing between the different directions of bends.

It will be understood that the sensor devices as described above, and the system as described above, are not limited to so-called flat roofs. It is also possible, for example, to use such a system in a so-called pitched roof. Also in those cases it may be desirable that a pressure buildup on the roof be measured, or that a possibility of leakage be measured. The skilled person will also appreciate that the sensor devices described in the foregoing can be used separately from each other. Thus it is possible on the one hand to measure the pressure buildup on the roof construction and on the other hand, separately therefrom, to provide a sensor device which is exclusively designed for detecting leakages. Preferably, however, the system is so designed that both phenomena can be detected and quantified, such that the detection system can activate the alarm means in a suitable manner.

Additionally it is possible to make use of properties of the system for further increasing the functionality thereof. Thus, an alarm signal may be given in the absence of the signal near the detector device. The absence of the signal may be caused by a technical malfunction. On the other hand, the absence of a signal may indicate that the conductor is not correctly functioning, because it is defective. Because of this the system is additionally suitable for use as a fire detector. In case of fire, damage will locally occur in the conductor, causing a change in the signal and the sudden absence of the signal. In that case an alarm may be raised. Furthermore, possible burglary can be prevented because the system is capable of registering whether a person is present on the roof. Sagging of the roof construction also leads to a micro bend or micro stretch in the conductor, which micro bend or micro stretch can be detected by the system, thus enabling the system to warn against severe damage to the roof construction. Thus, several condition characteristics (water accumulation, fire, burglary, constructional safety) of the roof can be registered and monitored, and warnings can be given, if necessary.

The skilled person will also appreciate that the alarm means may be any suitable means capable of alerting a user to an effect that may occur. The alarm means may be physical alarm means, for example, such as a bell. It is also possible, however, for the alarm means to comprise an electronic alert, for example an indicator or on a display, a text message or an e-mail. The present invention is not limited as regards the type of alarm means that can be used.

Only a few embodiments of the present invention are shown in the figures and described in the foregoing. The skilled person will appreciate that many variants, which may or may not be obvious, are possible within the scope of the present invention, which is defined in the appended claims.

## Claims

1. A sensor device for detecting a change in an amount of liquid, comprising a substantially elongated conductor (11) for electromagnetic signals, wherein the conductor is in contact with a contact element with a first circumferential part thereof, at a first axial position of the elongated conductor (11), and wherein the conductor (11) is in contact with a pressure element (221) at a second axial position of the elongated conductor axially spaced from said first axial position, substantially with a second circumferential part thereof located opposite said first circumferential part, wherein the pressure element and the contact element are movable relative to each other for inducing a micro bend or micro stretch in the conductor (11), wherein the pressure element is connected to a liquid container (4), such that an increase or a decrease of an amount of liquid in the liquid container (4) causes the relative spacing between the pressure element (221) and the contact element (223) to decrease or increase, respectively, wherein the elongated conductor is connected at one end thereof to a signal source (213) for emitting electromagnetic signals through the conductor, and wherein the conductor (11) is connected to a signal detector (215) at a second end located opposite said first end, wherein the signal detector is designed to detect disturbances in the electromagnetic signal caused by the micro bend or micro stretch.

2. A sensor device according to claim 1, wherein the sensor device comprises a substantially flat base (205b), wherein the contact element extends some distance from the base (205b), and wherein the conductor (11) is spaced from the base at the location of the location of the second axial position.

3. A sensor device according to claim 1 or 2, wherein the sensor device (210) comprises a second contact element (223b) which is axially spaced from said contact element, which second contact element is in contact with the first circumferential part of the conductor (11), as well as a second pressure element (222) which is spaced a further axial distance from the contact element, which second pressure element is in contact with the second circumferential part of the guide.

4. A sensor device according to claim 3, wherein the sensor device (210) comprises a substantially U-shaped contact section (223), wherein the contact element (225) and the second contact element (225) form at least the legs of the contact section.

5. A sensor device according to claim 4, wherein the axial spacing between the legs of the U-shaped contact section (223) is smaller than the axial spacing between the pressure element (221) and the second pressure element (222).

6. A sensor device according to one or more of claims 1-5, wherein the container for liquid is a container formed by a roof bottom (4) and upright circumferential walls (3) of a flat roof.

7. A sensor device according to one or more of claims 1-6, wherein the container (434) for liquid comprises a moisture absorption unit (431) which is connected to the pressure element or which includes the pressure element, wherein the moisture absorption unit (431) is designed to expand or contract in case of an increase or a decrease, respectively, of the amount of liquid in the container (434) for liquid.

8. A sensor device according to claim 7, wherein the moisture absorption unit (431) comprises a block-shaped absorption material which is confined on at least three sides in a substantially rigid absorption container (434).

9. A sensor device according to claim 8, wherein a freely movable side (432) of the absorption material can be brought into contact with the second circumferential part of the conductor (411).

10. A sensor device according to claim 9, wherein the freely movable side (432) is connected by means of spring elements (433) to a wall that is spaced from said freely movable side.

11. A sensor device according to claim 9 or 10, wherein the freely movable side (432) of the absorption material is movable substantially in a horizontal plane.

12. A sensor device according to one or more of the preceding claims, wherein the pressure element and the contact element (423) are movable relative to each other in a first direction, wherein the sensor device comprises an additional pressure element (431) and an additional contact element (424), which are movable relative to each other in a second direction substantially perpendicular to the first direction.

13. A sensor device according to claim 12, wherein the pressure element and the contact element (423) are configured according to one or ore of claims 1-6, and wherein the additional pressure element (431) and the additional contact element (424) are configured according to one or more of claims 7-11.

14. A roof for a building, comprising a sensor device (10) according to one or more of the preceding claims.

15. Use of a sensor device (10) according to one or more of claims 1-13, wherein said use comprises the detection of liquid (5) in and/or a roof (2) of a building.
